# EUROPÄISCHE PATENTSCHRIFT

(11) **EP 4 079 580 B1**
(45) Veröffentlichungstag und Bekanntmachung des Hinweises auf die Patenterteilung: **02.10.2024**
(21) Anmeldenummer: 22176807.0
(22) Anmeldetag: 09.04.2020
(51) Int. Cl.: B60R 13/02, B29C 45/16, B60Q 3/54, B60Q 3/62

(54) **VERKLEIDUNGSTEIL FÜR EINEN FAHRZEUGINNENRAUM GEBILDET ALS SPRITZGUSS-MEHRKOMPONENTENBAUTEIL**
TRIM PART FOR A VEHICLE INTERIOR FORMED AS A MULTI-COMPONENT INJECTION-MOLDED PART
PARTIE DE REVÊTEMENT POUR UN HABITACLE DE VÉHICULE CONÇUE SOUS LA FORME D'UN COMPOSANT À PLUSIEURS CONSTITUANTS MOULÉ PAR INJECTION

(30) Priorität: 03.05.2019 DE 102019111547
(43) Veröffentlichungstag der Anmeldung: 26.10.2022
(62) Teilanmeldung aus: 20719598.3
(73) Patentinhaber: HIB Trim Part Solutions GmbH, 76646 Bruchsal (DE)
(72) Erfinder: Röchert, Michael, 75203 Königsbach-Stein (DE); Sabuncuoglu, Mustafa, 69502 Hemsbach (DE)
(74) Vertreter: Staeger & Sperling Partnerschaftsgesellschaft mbB

(56) Entgegenhaltungen:
- EP-A1- 3 575 153
- DE-A1- 102010 039 270
- DE-A1- 102011 089 285
- DE-A1- 102013 202 222
- DE-A1- 102016 215 218
- DE-T5- 112017 000 694
- DE-U1- 202006 003 768
- US-A1- 2002 101 738
- US-A1- 2018 264 697

## Beschreibung

Die Erfindung betrifft ein Verkleidungsteil ausgeführt für einen Fahrzeuginnenraum gebildet als Spritzguss-Mehrkomponentenbauteil.

Gattungsbildende Spritzguss-Mehrkomponentenbauteile sind in der Technik als 2K-Bauteile bekannt, bei denen zwei Kunststoffe im Spritzguss verarbeitet werden, wobei der erste Kunststoff eine Hartkomponente und der zweite Kunststoff eine Weichkomponente bildet. Die Weichkomponente dient als physikalische Entkopplung und fungiert dabei als eine Art Dämpfungselement zwischen angrenzenden Kunststoffbauteilen, die bei Relativbewegungen sonst unerwünschte Knarzgeräusche verursachen können. Dies ist insbesondere bei Fahrzeugteilen problematisch, die im Innenraum verbaut werden, da Fahrzeugpassagiere sensibel auf derartige Geräusche reagieren und diese als besonders lästig empfinden. Gleichzeitig wird die Wertigkeit des Produktes negativ beurteilt, wenn es während der Fahrt derartige Geräusche erzeugt.

In neueren Entwicklungen werden Verkleidungsteile häufig mit einer Beleuchtung oder Hinterleuchtung versehen. Das hierfür benötigte Licht wird über Lichtleiter an die beleuchtenden Stellen geleitet. Die Lichtleiter werden dabei in das Verkleidungsteil oder eine daran ausgebildete Aufnahme geklipst, welche an einem Grundkörper des Verkleidungsteils vorgesehen ist. Dabei ist problematisch, dass die für die Beleuchtung benötigten Bauteile, insbesondere die Führung der Lichtleiter über Lichtleiteraufnahmen bei Relativbewegungen selbst unerwünschte Geräusche erzeugen können. Druckschriftlicher Stand der Technik aus dem vorliegenden technischen Gebiet ist aus den Dokumenten DE 10 2010 039 270 A1 und EP 3 575 153 A1 bekannt, und das Dokument DE 10 2016 215218 A1 offenbart ein Verkleidungsteil ausgeführt für einen Fahrzeuginnenraum und ausgebildet hinterleuchtet oder durchleuchtet zu werden, wobei das Verkleidungsteil ein Trägerteil ausgebildet zur Befestigung des Verkleidungsteils im Fahrzeuginnenraum sowie einen optionalen Lichtleiter umfasst, welches Trägerteil als Mehrkomponentenbauteil aus mindestens zwei unterschiedlichen Kunststoffen gebildet ist, wobei ein erster Kunststoff als Hartkomponente und ein zweiter Kunststoff als Weichkomponente miteinander verbunden sind, und wobei das Verkleidungsteil mindestens eine Lichtleiteraufnahme zur befestigenden und von dem Trägerteil der Hartkomponente des Trägerteils entkoppelten Aufnahme mindestens eines Lichtleiters aufweist und die Lichtleiteraufnahme aus der Weichkomponente des Trägerteils gebildet ist.

Der Erfindung liegt deshalb die Aufgabe zugrunde, ein beleuchtbares oder hinterleuchtbares Verkleidungsteil mit Geräuschentkopplung bereitzustellen. Diese Aufgabe wird durch die Merkmalskombination gemäß Patentanspruch 1 gelöst.

Erfindungsgemäß wird ein Verkleidungsteil, ausgeführt für einen Fahrzeuginnenraum und ausgebildet hinterleuchtet oder durchleuchtet zu werden, vorgeschlagen. Das Verkleidungsteil umfasst ein Trägerteil ausgebildet zur Befestigung des Verkleidungsteils im Fahrzeuginnenraum, wobei das Trägerteil als Spritzguss-Mehrkomponentenbauteil aus mindestens zwei unterschiedlichen Kunststoffen gebildet ist. Bei dem Trägerteil des Verkleidungsteils sind ein erster Kunststoff als Hartkomponente und ein zweiter Kunststoff als Weichkomponente im Spritzguss miteinander verbunden. Ferner weist das Verkleidungsteil mindestens eine Lichtleiteraufnahme zur befestigenden und von der Hartkomponente des Trägerteils entkoppelten Aufnahme mindestens eines Lichtleiters auf, wobei die Lichtleiteraufnahme aus der Weichkomponente des Trägerteils gebildet ist.

Die Lichtleiteraufnahme wird als Weichkomponente an das Trägerteil mit angespritzt und verhindert, dass im Einsatz, z.B. während der Fahrt, Geräusche durch eine Relativbewegung der Lichtleiteraufnahme gegenüber dem Trägerteil entstehen. Auch wird der in die Lichtleiteraufnahme einzulegende Lichtleiter von dem Trägerteil und somit der Hartkomponente entkoppelt. Zusätzliche Montageschritte für die Befestigung der Lichtleiteraufnahme können entfallen, so dass auch Fehlmontagen ausgeschlossen sind.

Bei dem Verkleidungsteil überdeckt die Weichkomponente vorzugsweise eine Oberfläche des Trägerteils, welche an die mindestens eine Lichtleiteraufnahme angrenzt. Es besteht somit ein unmittelbarer Übergang zwischen dem Teil der Weichkomponente, welche als Geräuschentkopplung auf dem Trägerteil flächig aufgebracht wird und der Lichtleiteraufnahme, welche ebenfalls zur Geräuschentkopplung beiträgt. Die Weichkomponente ist somit vorzugsweise einstückig an dem Trägerteil vorgesehen.

In einer Ausführungsvariante des Verkleidungsteils ist vorgesehen, dass die Lichtleiteraufnahme teilweise aus von dem Trägerteil vorstehenden Stegen aus der Hartkomponente gebildet ist, wobei die Stege zwischen sich einen mit der Weichkomponente ausgespritzten Einlegekanal für den Lichtleiter bilden. Das Trägerteil kann somit durch die Stege strukturelle Elemente bereitstellen, welche eine Führung für die Lichtleiter bieten. Die zusätzlich vorgesehene Weichkomponente bildet jedoch die Anlagefläche des Einlegekanals für die Lichtleiter, so dass im montierten Zustand kein direkter Kontakt zwischen dem Lichtleiter und der Hartkomponente besteht.

Vorzugsweise werden an dem Trägerteil des Verkleidungsteils mehrere Lichtleiteraufnahmen in Reihe angeordnet, welche den Lichtleiter an dem Verkleidungsteil entkoppelt von dem Trägerteil fixieren. Der Lichtleiter ist somit über die notwendige Erstreckung entlang des Verkleidungsteils über die jeweiligen Lichtleiteraufnahmen führbar, um die Beleuchtung oder Hinterleuchtung über die gewünschte Erstreckung des Verkleidungsbauteils gleichmäßig zu gewährleisten.

Eine erfindungsgemäße Ausführung des Verkleidungsteils ist dadurch gekennzeichnet, dass an der mindestens einen Lichtleiteraufnahme unmittelbar angrenzend oder diese überdeckend eine Streuscheibe angeordnet ist. Mittels der Streuscheibe kann das über eine Einkoppelelement in den Lichtleiter eingekoppelte Licht gestreut werden, so dass eine homogene Ausleuchtung über eine Fläche gewährleistet ist.

Ferner ist günstig, dass das Verkleidungsteil mindestens ein LED-Modul aufweist, mit dem der mindestens eine Lichtleiter verbunden ist. Über das LED-Modul wird das Licht für die Hinterleuchtung bzw. Durchleuchtung des Verkleidungsbauteils erzeugt. Dabei sieht eine vorteilhafte Lösung vor, dass das mindestens eine LED-Modul an dem Trägerteil an einer Modulaufnahme befestigt ist, die vorzugsweise durch die Weichkomponente gebildet ist. Somit ist auch die LED-Modulaufnahme geräuschentkoppelt.

In einer erfindungsgemäßen Ausführung weist das Verkleidungsteil eine Dekorlage auf, welche auf einer Sichtseite des Verkleidungsteils an dem Trägerteil befestigt ist. Als Dekorlage können beispielsweise Furniere oder Gewebe dienen, welche die Sichtseite des Verkleidungsteils bereitstellen. Die Dekorlage wird vollständig oder abschnittsweise durchleuchtet oder hinterleuchtet, um beispielsweise einen rahmenartigen Leuchtstreifen zu erzeugen.

In einer erfindungsgemäßen Ausführung des Verkleidungsteils werden die Dekorlage und die Streuscheibe nebeneinander in derselben Ebene angeordnet, so dass eine unmittelbare Beleuchtung mittels des Lichtleiters durch die Streuscheibe ermöglicht ist. Von der Sichtseite ist dann die Dekorlage mit angrenzender unmittelbar hinterleuchteter Streuscheibe zu erkennen, welche beispielsweise den Rahmen oder ein Rahmenelement des Verkleidungsteils bildet.

Die Hartkomponente wird in einer für die Erfindung günstigen Ausführung beispielsweise aus PC/ABS (Polycarbonate/Acrylnitril Butadien Styrol) insbesondere mit einem Glasfaseranteil, die Weichkomponente aus einem thermoplastischen Elastomer (TPE) gebildet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Explosionsdarstellung eines Verkleidungsteils zur Befestigung an einem Modul-Bauteil;
- Fig. 2: das schematische Verkleidungsteil gemäß Figur 1 im montierten Zustand.

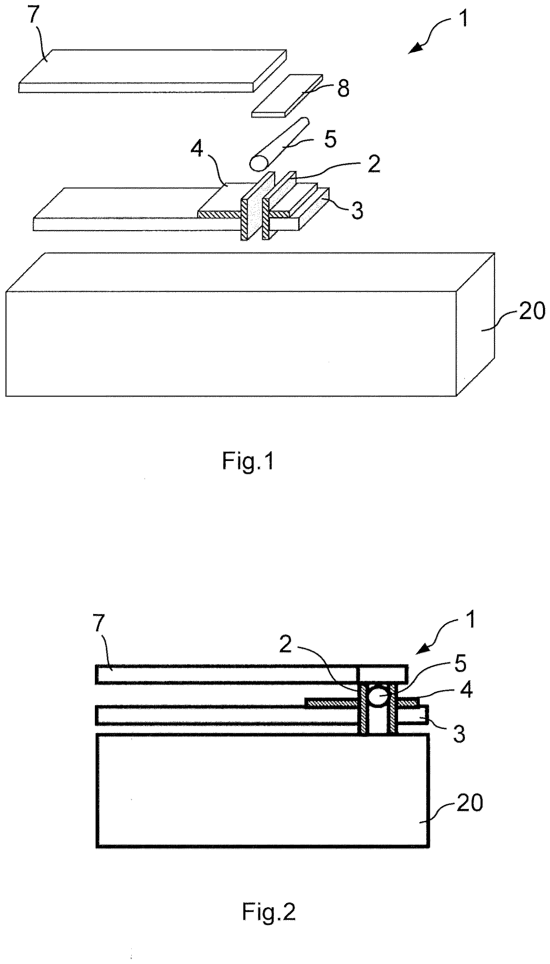

Die Figuren 1 und 2 sind lediglich beispielhaft schematisch und dienen zum besseren Verständnis der Offenbarung. Gezeigt ist das Verkleidungsteil 1 zur Befestigung an einem Modul-Bauteil 20, welches beispielsweise ein Armaturenbrett oder eine Tür eines Kraftfahrzeugs sein kann.

Das Verkleidungsteil 1 umfasst das Trägerteil 3, mit dem es an der Modul-Bauteil 20 befestigt wird. Zur Sichtseite weisend ist auf dem Trägerteil 3 die Dekorlage 7 angeordnet. Die Dekorlage 7 bildet das wesentliche Element, dass der Benutzer von dem Verkleidungsteil 1 erkennt. Seitlich in derselben oder nahezu derselben Ebene angrenzend an die Dekorlage 7 ist in der gezeigten Ausführung die Streuscheibe 8 vorgesehen, welche den mit dem LED-Modul (nicht gezeigt) verbundenen Lichtleiter 5 überdeckt. Über den Lichtleiter 5 wird das Licht durch die Streuscheibe 8 verteilt, so dass das Verkleidungsteil 1 eine Art einseitig beleuchteten Rahmen aufweist. In einer nicht gezeigten alternativen Ausführung kann die Streuscheibe 8 auch zur Dekorlage 7 überstehend oder unterstehend gebildet sein.

Das Trägerteil 3 des Verkleidungsteils 1 ist als Spritzguss-Mehrkomponentenbauteil mit zwei unterschiedlichen Kunststoffen gebildet. Flächig auf der Oberfläche des Trägerteils 3 ist die Weichkomponente 4 verteilt und bildet eine Geräuschentkopplung gegenüber angrenzenden Bauteilen, beispielsweise der Dekorlage 7 oder dem Modul-Bauteil 20. Wenn auch nicht gezeigt, so kann die Weichkomponente 4 des Trägerteils 3 hierfür auch auf der zum Modul-Bauteil 20 weisenden Oberfläche des Trägerteils 3 vorgesehen werden. Die Weichkomponente 4 bildet jedoch in jedem Fall die Lichtleiteraufnahme 2 zur befestigenden und von der Hartkomponente des Trägerteils 3 entkoppelten Aufnahme des Lichtleiters 5. In den Figuren ist dies vereinfacht dargestellt, jedoch kann an dem Trägerteil 3 auch eine Stegkonstruktion vorgesehen werden, welche eine Art Rahmenstruktur für die Lichtleiteraufnahme 2 bestimmt, die dann mit der Weichkomponente umspritzt wird. Somit ergibt sich ein Einlegekanal aus der Weichkomponente für den Lichtleiter 5.

Die Streuscheibe 5 liegt auf der Lichtleiteraufnahme 2 gebildet aus der Weichkomponente auf und ist mithin ebenfalls geräuschentkoppelt. Der Lichtleiter 5 ist stangeartig dargestellt, kann alternativ jedoch auch aus einer oder mehreren Lichtplatten gebildet werden.

## Patentansprüche

1. Verkleidungsteil (1) ausgeführt für einen Fahrzeuginnenraum und ausgebildet hinterleuchtet oder durchleuchtet zu werden, wobei das Verkleidungsteil (1) ein Trägerteil (3) ausgebildet zur Befestigung des Verkleidungsteils (1) im Fahrzeuginnenraum sowie einen optionalen Lichtleiter (5) umfasst, welches Trägerteil (3) als Spritzguss-Mehrkomponentenbauteil aus mindestens zwei unterschiedlichen Kunststoffen gebildet ist, wobei ein erster Kunststoff als Hartkomponente und ein zweiter Kunststoff als Weichkomponente im Spritzguss miteinander verbunden sind, und wobei das Verkleidungsteil (1) mindestens eine Lichtleiteraufnahme (2) zur befestigenden und von der Hartkomponente des Trägerteils (3) entkoppelten Aufnahme des mindestens einen Lichtleiters (5) aufweist und die Lichtleiteraufnahme (2) aus der Weichkomponente des Trägerteils (3) gebildet ist, wobei an der mindestens einen Lichtleiteraufnahme (2) unmittelbar angrenzend oder diese überdeckend eine Streuscheibe (8) angeordnet ist, wobei das Verkleidungsteil eine Dekorlage (7) aufweist, welche auf einer Sichtseite des Verkleidungsteils (1) an dem Trägerteil (3) befestigt ist, wobei der Lichtleiter (5) eine indirekte Beleuchtung für die Dekorlage (7) bildet, und wobei die Dekorlage (7) und die Streuscheibe (8) nebeneinander in derselben Ebene angeordnet sind.

2. Verkleidungsteil nach Anspruch 1, **dadurch gekennzeichnet, dass** die Weichkomponente eine Oberfläche des Trägerteils (3) überdeckt, welche an die mindestens eine Lichtleiteraufnahme (2) angrenzt.

3. Verkleidungsteil nach Anspruch 1 oder 2, **dadurch gekennzeichnet, dass** die Lichtleiteraufnahme (2) teilweise aus von dem Trägerteil (3) vorstehenden Stegen aus der Hartkomponente gebildet ist, wobei die Stege zwischen sich einen mit der Weichkomponente ausgespritzten Einlegekanal für den Lichtleiter (5) bilden.

4. Verkleidungsteil nach einem der vorigen Ansprüche, **dadurch gekennzeichnet, dass** an dem Trägerteil (3) mehrere Lichtleiteraufnahmen (2) in Reihe angeordnet sind, welche den Lichtleiter (5) an dem Verkleidungsteil (1) entkoppelt von dem Trägerteil (3) fixieren.

5. Verkleidungsteil nach einem der vorigen Ansprüche, **dadurch gekennzeichnet, dass** es mindestens ein LED-Modul aufweist, mit dem der mindestens eine Lichtleiter (5) verbunden ist.

6. Verkleidungsteil nach dem vorigen Anspruch, **dadurch gekennzeichnet, dass** das mindestens eine LED-Modul an dem Trägerteil (3) an einer Modulaufnahme befestigt ist, wobei die Modulaufnahme durch die Hartkomponente oder die Weichkomponente gebildet ist.

7. Verkleidungsteil nach einem der vorigen Ansprüche, **dadurch gekennzeichnet, dass** die Hartkomponente aus einem thermoplastischen Kunststoff, insbesondere aus PC/ABS (Polycarbonate/Acrylnitril Butadien Styrol) mit einem Glasfaseranteil und die Weichkomponente aus einem thermoplastischen Elastomer (TPE) gebildet ist.

## Claims

1. A trim part (1) made for a vehicle interior and designed to be backlit or transilluminated, wherein the trim part (1) comprises a carrier part (3) designed to fasten the trim part (1) in the vehicle interior and an optional optical waveguide (5), which carrier part (3) is formed as an injection-moulded multi-component part from at least two different plastics, wherein a first plastic, as a hard component, and a second plastic, as a soft component, are connected to one another during injection moulding, and wherein the trim part (1) has at least one optical waveguide receptacle (2) for fasteningly receiving the optical waveguide (5) in a manner as to be decoupled from the hard component of the carrier part (3), and the optical waveguide receptacle (2) is formed from the soft component of the carrier part (3), wherein a diffuser (8) is arranged so as to be directly adjacent to the at least one optical waveguide receptacle (2) or cover the same, wherein the trim part has a decorative layer (7) which is fastened to the carrier part (3) on a visible side of the trim part (1), wherein the optical waveguide (5) forms an indirect lighting for the decorative layer (7), and wherein the decorative later (7) and the diffuser (8) are arranged next to one another in the same plane.

2. The trim part according to claim 1, **characterized in that** the soft component covers a surface of the carrier part (3) which adjoins the at least one optical waveguide receptacle (2).

3. The trim part according to claim 1 or 2, **characterized in that** the optical waveguide receptacle (2) is partially formed from webs made of the hard component which protrude from the carrier part (3), the webs forming between them an insertion channel for the optical waveguide (5) which is injection-moulded with the soft component.

4. The trim part according to any one of the preceding claims, **characterized in that** a plurality of optical wave guide receptacles (2) are arranged in series on the carrier part (3) which fix the optical wave guide (5) to the trim part (1) in a manner as to be decoupled from the carrier part (3).

5. The trim part according to any one of the preceding claims, **characterized in that** it has at least one LED module to which the at least one optical waveguide (5) is connected.

6. The trim part according to the preceding claim, **characterized in that** the at least one LED module is fastened to the carrier part (3) on a module holder, the module holder being formed by the hard component or the soft component.

7. The trim part according to any one of the preceding claims, **characterized in that** the hard component is made of a thermoplastic plastic, in particular of PC/ABS (polycarbonate/acrylonitrile butadiene styrene) with a glass fiber fraction, and the soft component is made of a thermoplastic elastomer (TPE).

## Revendications

1. Pièce d'habillage (1) configurée pour un habitacle de véhicule et réalisée pour être rétroéclairée ou transilluminée, dans laquelle la pièce d'habillage (1) comprend une pièce de support (3) réalisée pour fixer la pièce d'habillage (1) dans l'habitacle de véhicule, ainsi qu'un guide de lumière (5) en option, laquelle pièce de support (3) est formée comme un composant à plusieurs constituants, moulé par injection, composé d'au moins deux matières plastiques différentes, dans laquelle une première matière plastique en tant que composant dur et une deuxième matière plastique en tant que composant souple sont reliés ensemble lors du moulage par injection, et dans laquelle la pièce d'habillage (1) présente au moins un logement de guide de lumière (2) pour recevoir ledit au moins un guide de lumière (5) en fixation et en découplage du composant dur de la pièce de support (3), et le logement de guide de lumière (2) est formé par le composant souple de la pièce de support (3), dans laquelle un diffuseur (8) est disposé sur ledit au moins un logement de guide de lumière (2) de manière directement adjacente ou en recouvrant celui-ci, dans laquelle la pièce d'habillage présente une couche décorative (7) qui est fixée à la pièce de support (3) sur une face d'aspect de la pièce d'habillage (1), dans laquelle le guide de lumière (5) constitue un éclairage indirect pour la couche décorative (7), et dans laquelle la couche décorative (7) et le diffuseur (8) sont disposés côte à côte dans le même plan.

2. Pièce d'habillage selon la revendication 1, **caractérisée en ce que** le composant souple recouvre une surface de la pièce de support (3) qui est adjacente audit au moins un logement de guide de lumière (2).

3. Pièce d'habillage selon la revendication 1 ou 2, **caractérisée en ce que** le logement de guide de lumière (2) est formé partiellement par des entretoises en composant dur faisant saillie à partir de la pièce de support (3), dans laquelle les entretoises forment entre elles un canal d'insertion, injecté avec le composant souple, pour le guide de lumière (5).

4. Pièce d'habillage selon l'une quelconque des revendications précédentes, **caractérisée en ce que** plusieurs logements de guide de lumière (2) sont disposés en série sur la pièce de support (3) et fixent le guide de lumière (5) à la pièce d'habillage (1) en découplage de la pièce de support (3).

5. Pièce d'habillage selon l'une quelconque des revendications précédentes, **caractérisée en ce qu'**elle présente au moins un module LED auquel est relié ledit au moins un guide de lumière (5).

6. Pièce d'habillage selon la revendication précédente, **caractérisée en ce que** ledit au moins un module LED est fixé sur la pièce de support (3) à un logement de module, dans laquelle le logement de module est formé par le composant dur ou le composant souple.

7. Pièce d'habillage selon l'une quelconque des revendications précédentes, **caractérisée en ce que** le composant dur est formé en matière plastique thermoplastique, en particulier en PC/ABS (polycarbonate/ acrylonitrile butadiène styrène) avec une partie en fibres de verre, et le composant souple est formé en élastomère thermoplastique (TPE).
